# EUROPÄISCHE PATENTSCHRIFT

(11) **EP 1 273 882 B1**
(45) Veröffentlichungstag und Bekanntmachung des Hinweises auf die Patenterteilung: **20.01.2010**
(21) Anmeldenummer: 02014564.5
(22) Anmeldetag: 01.07.2002
(51) Int. Cl.: G01C 15/00

(54) **Vorrichtung und Verfahren zum Vermessen von Räumlichkeiten und Maschinen**
Device and method for measuring premises and machines
Dispositif et procédé pour mesurer des locaux et des machines

(30) Priorität: 03.07.2001 DE 10131740
(43) Veröffentlichungstag der Anmeldung: 08.01.2003
(73) Patentinhaber: Prüftechnik Dieter Busch AG, 85737 Ismaning (DE)
(72) Erfinder: Busch, Dieter, 85737 Ismaning (DE)

(56) Entgegenhaltungen:
- EP-A- 0 841 535
- WO-A-99/60335
- WO-A-2005/029122
- US-A- 6 140 957
- US-A1- 2004 122 628

## Beschreibung

Die Erfindung betrifft eine Vorrichtung und ein zugehöriges Verfahren zum Vermessen von Räumlichkeiten und Maschinen.

Eine Vorrichtung zum Vermessen von Maschinen wird in der (z.Zt. des Anmeldetages unveröffentlichten) DE 10124287.5 angegeben. Mit dieser Vorrichtung werden jedoch nur solche Maße erfaßt, und in ein Rechnersystem eingegeben, welche sich in einer einzigen Dimension erstrecken.

Aus dem Patent US 6 140 957, das für den Oberbegriff des Anspruchs 1 herangezogen wird, ist eine Vermessungsvorrichtung mit einer Laser-Entfernungsmessung und einem Gyroskop (INS) bekannt. Eine Referenz wird mit über GPS ermittelt.

Das Dokument WO99/60335 A1 behandelt eine Vermessungsvorrichtung mit einer Richtungsmeß-Einrichtung, bei der die Abstände zwischen Pixeln einer Digitalkamera und /oder Schwenkwinkel der Kamera zur Bestimmung von Abständen und Winkeln zwischen Referenz und Target, die beide mit der Digitalkamera abgebildet werden, herangezogen werden.

In der Anmeldung EP 0 841 535 A2 wird eine Vermessungsvorrichtung mit einer Richtungsmeß-Einrichtung beschrieben, bei der ein Tachymeter auf einem Stativ zur Winkelmessung verwendet wird. Somit dient eine Kipp- und Dreheinrichtung zur Ausrichtung und Winkelmessung.

Eine andere bekannte Vorrichtung zum Vermessen von Maschinen bedient sich einer oder mehrerer elektronischer Kameras, deren Signale in Daten umgewandelt werden, aus denen komplette und dreidimensionale Positions-Informationen abgeleitet werden. Wiewohl diese Vorrichtungen für Dokumentationszwecke sehr praktisch und nützlich sind, da auf diese Weise aktuelle und im wesentlichen fehlerfreie Status-Informationen von Maschinen innerhalb ihrer vorgesehenen Räumlichkeiten bereitgestellt werden können, haftet ihnen der Nachteil an, daß eine große Computer-Leistung zu deren Benutzung bereitgestellt werden muß.

Die vorliegende Erfindung löst dieses Problem und ist darüberhinaus in der Lage, eine kostengünstige Einrichtung bereitzustellen, mit der Räumlichkeiten innerhalb eines Hauses, Bürogebäudes oder einer Fertigungsanlage in einfacher, bequemer und kostengünstiger Weise vermessen werden können.

Die erfindungsgemäße Vorrichtung ist in Anspruch 1 definiert und beruht darauf, daß ein kleinvolumiger Meßcomputer bereitgestellt wird, welcher einerseits mit einem Laser-Entfernungsmeßsystem von hoher Genauigkeit (englischsprachig auch als "Laser-Ranger" bezeichnet) versehen ist, andererseits eine elektronisch abfragbare Orientierungs-Signalgeberkombination aufweist. Die Orientierungs-Signalgeberkombination besteht aus a) einem elektronischen Kompaß, welcher auf das Erdmagnetfeld reagiert und bevorzugt eine Auflösung von besser als 0,5 Grad aufweist und b) einem Gyroskop auf Basis mikromechanisch hergestellter mechanischer Oszillatoren. Diese können zur Erzielung erhöhter Genauigkeit zusätzlich auf Tunneleffekt-Basis funktionieren. Es kann ein einziges, mit Vorteil jedoch mehrere solcher Gyroskope vorgesehen werden, da mehrere Gyroskope die Genauigkeit verbessern, auch wenn die erforderliche Rechnerleistung in größerem Umfang bereitgestellt werden muß. - Die Anzahl der Laser-Entfernungsmeßgeräte braucht gemäß der Erfindung nicht größer als eins zu sein, wiewohl auch hier eine Mehrfachkombination solcher Entfemungsmeßgeräte eine statistisch stärker abgesicherte Aussage liefern kann. Gemäß der Erfindung ist der Meßcomputer mit einem Sichtschirm/Display ausgestattet samt zugehörigen Eingabemitteln wie Tastatur, Touchpad, Maus, Joystick oder dergleichen. Der Sichtschirm kann durch eine Sprachausgabe-Einrichtung ergänzt werden.

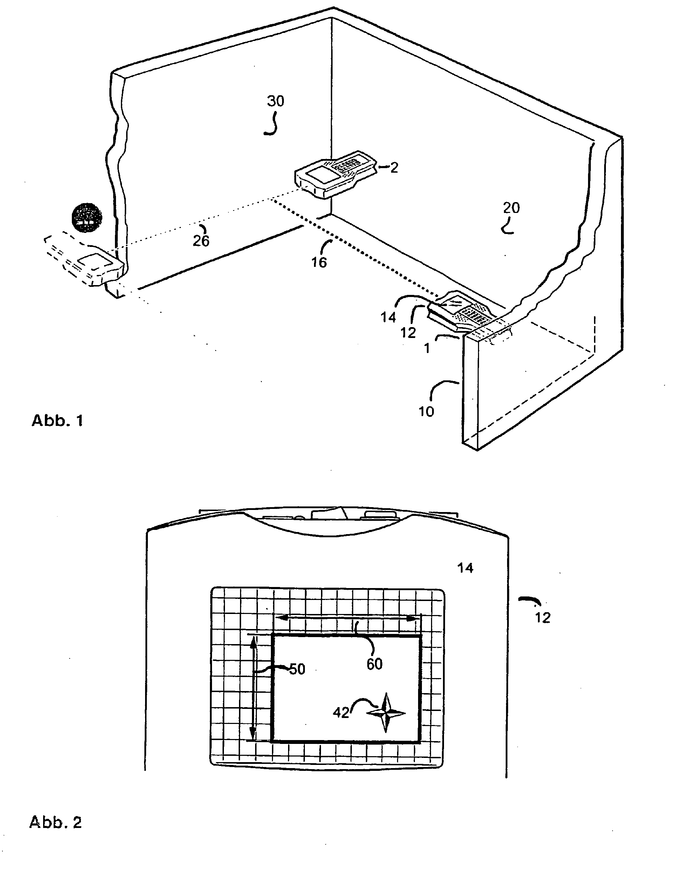

Die Erfindung wird anhand der Figuren 1 und 2 erläutert.

Wie in Fig. 1 gezeigt, wird ein erfindungsgemäßes Gerät in Form eines handlichen Rechners 12 in einer ersten Meßposition 1 mittels einer geeigneten Meßkante, oder einer geeigneten Anlegefläche, an die Oberfläche einer Wand 10 angelegt. Durch Betätigen eines Bedienelementes (z.B. auf der Tastatur des Gerätes) wird die Entfernung bis zu einer gegenüberliegenden Wand 30 mittels eines Laser-Meßmittels gemessen, welches hierzu einen Laserstrahl 16 aussendet und als reflektiertes Licht empfängt. Gleichzeitig wird in Meßposition 1 die Orientierung des Rechners 12 anhand des Erdmagnetfeldes elektronisch festgestellt (elektronischer Kompass im Inneren des Rechners 12 nicht gezeigt), und gleichzeitig wird durch ein im Inneren des Rechners 12 befindliches Gyroskop diese Richtung als Referenzrichtung bestimmt und in einem elektronischen Speicher des Rechners hinterlegt.

Wie in Fig. 2 gezeigt, kann der Bediener mittels Bedienelementen die so definierte Strecke nach Wunsch, d. h. ggf. skaliert und ggf. in einer abweichenden Richtungs-Darstellung auf dem Display 14 des Rechners plazieren, z.B. als Meßstrecke 50 , die in diesem Fall mit der tatsächlich gemessenen Nord-Süd-Richtung übereinstimmen möge. In ähnlicher Weise wird sodann die Meßstrecke 60 aufgenommen, wozu ein erneuter Meßvorgang ausgeführt wird, diesmal in Meßposition 2 an der Wand 20, und unter Aussendung eines Laserstrahls 26 (schematisch gezeigt). Diese Meßstrecke wird durch den Benutzer an die Meßstrecke 50 sinngemäß angefügt. In einer verbesserten Ausführung der Erfindung wird dieser Vorgang automatisiert, und zwar unter Zuhilfenahme eines zusätzlich vorgesehenen Beschleunigungssensors, welcher lineare Beschleunigungen des Rechners 20 im Raum registrieren und zu einem Entfernungsmeßwert aufsummieren kann.

In ähnlicher Weise wird für die verbleibenden Seiten eines Raumes verfahren. In vergleichbarer Weise können insbesondere auch die Dimensionen, Positionsangaben und Richtungen für Maschinen innerhalb einer Fabrikhalle ermittelt werden, oder die Dimensionen vom Maschinen bzw. Positionen von Maschinen relativ zueinander.

Auf diese Weise können in bequemer und schneller Form die Abmessungen eines Raumes oder speziell einer Maschinenhalle samt darin befindlichen Objekten bestimmt werden.

Das Gerät kann nicht nur horizontale Abmessungen und azimutale Richtungen erfassen, sondern auch vertikale Distanzen (Raumhöhen usw.)

Zur Erleichterung der Visualisierung eines Meßergebnisses kann auf dem Display 14 des Rechners 12 eine Windrose 42 angezeigt werden.

Ein mittels des Rechners 12 erfaßtes Meßergebnis kann über eine Rechner-Schnittstelle (nicht näher gezeigt) an einen übergeordneten, stationären Rechner geschickt werden. Dies kann drahtgebunden oder drahtlos geschehen. Genauso ist es möglich, daß ein solcher übergeordneter Rechner bereits bekannte Daten an den Rechner 12 schickt zum Zwecke der weiteren Bearbeitung oder ggf. zur Korrektur.

Da die gyroskopgestützte Richtungsinformation über die Zeit driftet, und der elektronische Magnetkompass eventuell lokale Mißweisungen anzeigen wird, ist erfindungsgemäß vorgesehen, daß beide auf unterschiedliche Weise gewonnenen Richtungsinformationen fortlaufend miteinander verglichen werden und auf einen plausibel erscheinenden Wert abgeglichen werden. Bei starker Differenz der Richtungs-Meßwerte kann ein optisches oder akustisches Warnsignal durch den Rechner 12 abgegeben werden (Alarm-Geber nicht gezeigt).

Es versteht sich, daß durch das erfindungsgemäße Gerät nicht nur Entfernungen und Richtungen gemessen werden können, sondern aus solchen Meßwerten auch Flächen, Volumina, Diagonalen usw. nach Bedienerwunsch, und unter Zuhilfenahme der Tastatur des Rechners 12, errechnet werden können.

Die Vermessung von Entfernungen, Flächen, Volumina usw. mit Hilfe des erfindungsgemäßen Gerätes gelingt um so besser und genauer, je weniger die Orientierung einer erfaßten Meßstrecke von der Horizontalrichtung bzw. Vertikalrichtung abweicht. Um diese Randbedingung einzuhalten, kann vorgesehen werden, daß spezielle Ausführungsformen des Gerätes mit einem elektronischen Inclinometer ausgerüstet sind, mit dem die Orientierung des Gerätes im Raum festgestellt werden kann. Unter Verwendung eines solchen Inclinometers kann dann dafür gesorgt werden, daß nur solche Entfernungs-Messwerte erfaßt werden, die sich auf eine annähernd exakt horizontale oder vertikale Meßrichtung beziehen.

## Patentansprüche

1. Vorrichtung zum Vermessen der Dimensionen und Orientierung von Räumlichkeiten und/oder Maschinen,
enthaltend
- einen tragbaren Rechner (12)
- eine Display (14)
- eine Eingabevorrichtung
- eine Laserlicht-Entfernungsmeßeinrichtung, welche eine Anlagefläche oder -kante aufweist
- eine Richtungsmeß-Einrichtung, welche in Kombination umfaßt:
- einen elektronischen Magnet-Kompaß hoher Genauigkeit
- ein mit mikromechanischen Mitteln hergestelltes Gyroskop
- eine Software zur Errechnung von Meßwerten und zur Visualisierung solcher Meßwerte auf dem Display (14)
**dadurch gekennzeichnet, dass** ständig und fortlaufend azimutale Richtungsbestimmungen durch sowohl den elektronischen Magnetkompaß als auch durch das mit mikromechanischen Mitteln hergestellte Gyroskop durchgeführt werden und die so ermittelten Richtungs-Meßwerte mittels geeigneter Filter- und Anpaßprogramme auf einen plausiblen Wert abgeglichen werden.

2. Vorrichtung nach Anspruch 1, **dadurch gekennzeichnet , daß** ein Inclinometer vorhanden ist, mittels welchem bei der Erfassung von Entfernungs-Messwerten überprüft werden kann, ob eine vertikale oder horizontale Meßrichtung genügend genau eingehalten wird.

3. Verwendung einer Vorrichtung nach einem der vorhergehenden Ansprüche für das Vermessen von Maschinen oder Maschinenhallen.

## Claims

1. Device for measuring the dimensions and orientation of premises and/or machines, including
- a portable computer (12)
- a display (14)
- an input device
- a laser light distance measuring device which has a seating surface or seating edge
- a direction measuring device which comprises, in combination:
- a high-accuracy electronic magnetic compass
- a gyroscope produced with the aid of micromechanical means
- software for calculating measured values and for visualizing such measured values on the display (14),
**characterized in that** azimuthal determinations of direction are carried out continuously and without interruption both by the electronic magnetic compass and by the gyroscope produced with the aid of micromechanical means, and the measured direction values thus determined are adjusted to a plausible value by means of suitable filtering and matching programs.

2. Device according to Claim 1, **characterized in that** an inclinometer is present by means of which it is possible to check when acquiring measured distance values whether a vertical or horizontal measuring direction is being observed with sufficient accuracy.

3. Use of a device according to one of the preceding claims for the purpose of measuring machines or machine shops.

## Revendications

1. Dispositif pour mesurer les dimensions et l'orientation d'espaces et/ou de machines, incluant
- un ordinateur portable (12)
- un écran (14)
- un dispositif de saisie
- un dispositif de mesure de distance à lumière laser, lequel présente une surface ou un bord d'appui,
- un dispositif de mesure de direction qui inclut une combinaison d'une boussole magnétique électronique à haute précision et d'un gyroscope constitué de moyens micromécaniques,
- un logiciel pour calculer les valeurs mesurées et pour visualiser lesdites valeurs mesurées sur l'écran (14),
**caractérisé en ce que**
des déterminations systématiques et continues de la direction azimutale sont effectuées à la fois par la boussole magnétique électronique et par le gyroscope constitué de moyens micromécaniques et les valeurs mesures de la direction ainsi déterminées sont harmonisées à une valeur plausible au moyen de programmes de filtrage et d'adaptation appropriés.

2. Dispositif selon la revendication 1, **caractérisé en ce qu'**il existe un inclinomètre qui permet de vérifier, lors de l'acquisition des valeurs mesurées de la distance, si une direction de mesure verticale ou horizontale est respectée avec suffisamment de précision.

3. Utilisation d'un dispositif selon l'une des revendications précédentes pour mesurer des machines ou des halls de machines.
